# EUROPEAN PATENT SPECIFICATION

(11) **EP 0 964 534 B1**
(45) Date of publication and mention of the grant of the patent: **03.03.2004**
(21) Application number: 99303586.4
(22) Date of filing: 07.05.1999
(51) Int. Cl.: H04B 7/26, H04L 1/12

(54) **DECT data transmitting and receiving apparatus using speech frame**
DECT Sende- und Empfangseinrichtung für Daten unter Verwendung eines Sprachrahmens
Appareil de transmission et de réception pour données DECT utilisant une trame des données vocales

(30) Priority: 26.05.1998 JP 14478798
(43) Date of publication of application: 15.12.1999
(73) Proprietor: ALPS ELECTRIC CO., LTD., Ota-ku Tokyo 145 (JP)
(72) Inventor: Izumi, Hideo, Soma-shi, Fukushima-ken (JP); Miura, Yoshinori, Soma-shi, Fukushima-ken (JP); Mangan, Peter, South Circular Road, Limerick (IE); Forde, Brian, Dublin 3 (IE); Murphy, Jenny, Harolds Cross, Dublin 6 (IE); Bartley, Ian, Fermoy, County Cork (IE)
(74) Representative: Kensett, John Hinton

(56) References cited:
- EP-A- 0 399 612
- EP-A- 0 595 637
- WO-A-98/47256
- US-A- 4 939 731

## Description

The present invention relates to an apparatus for performing data communication based on Digital Enhanced Cordless Telecommunication (DECT), among mobile communication units, based on time division multiple access (TDMA) methods.

Multiple access methods for enabling a plurality of users to simultaneously communicate by sharing a wireless communication channel are known. Examples of such methods are a frequency division multiple access (FDMA) method, a time division multiple access (TDMA) method, and a code division multiple access (CDMA) method.

For example, in Japan, the Personal Handyphone System (PHS), which is a TDMA system, etc., has been put to practical use. A system similar to PHS, the Digital Enhanced Cordless Telecommunication (DECT) system, has been adopted and is widely used in accordance with common specifications in European countries including the former Soviet Union, African countries, Middle and Near East countries, South American countries, Oceanian countries, China, India, Taiwan, Singapore, Malaysia, etc.

The DECT system was developed based on a common European wireless communication standard established by the European Telecommunication Standard Institute (ETSI) presupposing that it would enable data transmission as well as speech transmission.

As a DECT frequency band, a band of 1.88 to 1.89 GHz is used in Europe, a band of 1.91 to 1.93 GHz in South America, and a band of 1.90 to 1.92 GHz in China. For communication in these bands, 10 physical channels are used and 12-multiplexing time division is performed.

For DECT data transmission, an RS-232C/UART (IEEE-based) serial interface is used. A procedure is used in which serial data is converted into a code in accordance with the DECT before being transmitted, and the code is received and demodulated to regenerate the serial data.

An example of use of the mentioned procedure is dealt with by the international patent application WO 98/47 256.

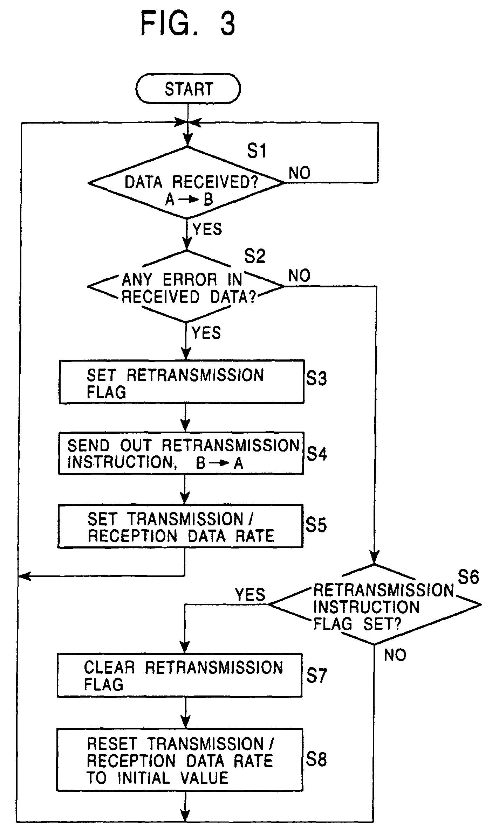

Fig. 3 shows an example of the basic specifications for the PHS used in Japan and the above-described DECT system.

With respect to data communication based on the above-described DECT system, a regular format for data transmission has been prescribed as a data service profile such that transmission at a rate of 64 kbps (Air) is performed by using two slots, and an error-correcting function or the like is also provided. However, the process of using this regular format is complicated and specialized in each of hardware and software configurations, so that the format cannot easily be used. There has been a demand for a solution to this problem.

In view of these circumstances, an object of the present invention is to provide a simple data transmitting and receiving apparatus which can perform 32 kbps Max. (Air) data transmission by using one of speech data transmission slots while the same hardware and software systems as those of the home telephone are used, and which can transmit data with improved reliability in such a manner that, after a data transmission error has occurred, the data is retransmitted by selecting the transmission rate without using an error-correcting coding technique which is complicated and which reduces the effective data transmission rate.

To achieve this object, according to the present invention, there is provided a DECT data transmitting and receiving apparatus which performs transmission and reception of one data set by using one slot in the same format as that for speech transmission, the apparatus comprising a DECT coding section for DECT-encoding serial transmission data, a transmitting section for transmitting, at a predetermined transmission rate, the data encoded by the DECT coding section, receiving section for receiving DECT data, a demodulation section for demodulating the received DECT data received by the receiving section to output a serial reception data, a frequency control section for controlling frequencies in the transmitting section and the receiving section, a transmitting-receiving switching section for switching the connection between an antenna and the transmitting section and the connection between the antenna and the receiving section, a transmission and reception slots control section for performing slot control of the serial transmission data and the serial reception data, a control section having a storage section in which a control program is stored, from which data can be read, and to which data can be written, the control section controlling each of the other sections, error detection means for detecting errors in the DECT received data and for informing the control section of a detection result, and retransmission instruction sending means for sending out a data retransmission instruction by being commanded by the control section according to information from the error detection means.

Specifically, the retransmission instruction sending means may send out a retransmission instruction designating a data transmission rate set by reducing the predetermined data transmission rate.

The data transmission rate may be successively reduced at a predetermined reduction rate, and the data retransmission instruction may be sent out a certain number of times. The reliability with which data is transmitted is improved thereby.

Embodiments of the invention, will now be described, by way of example only, with reference to the accompanying drawings, in which:
Fig. 1 is a block diagram showing the configuration of functional sections of a DECT transmitting and receiving apparatus which represents an embodiment of the present invention;
Fig. 2 is a diagram showing the data format for DECT transmission and reception in the embodiment of the present invention;
Fig. 3 is a flowchart for explaining the process of transmitting data in the embodiment of the present invention; and

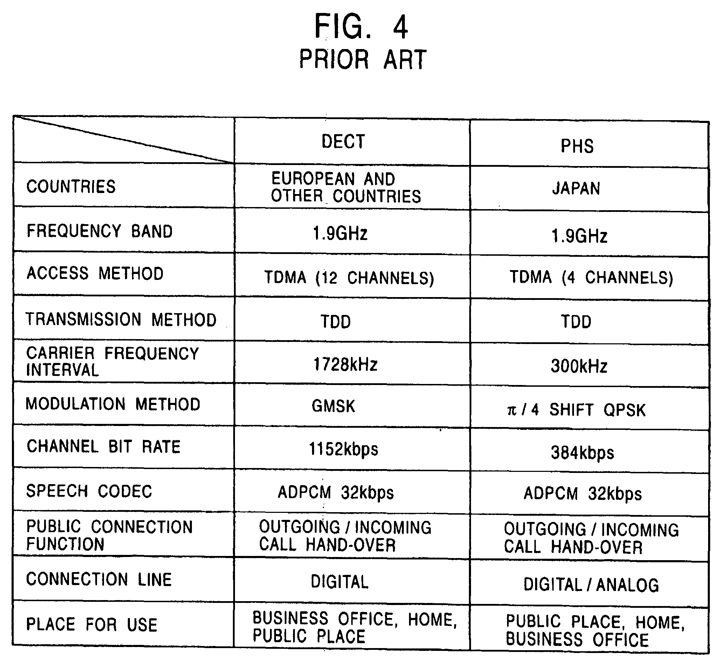

Fig. 4 is a diagram showing an example of the basic specifications for the PHS used in Japan and the DECT system.

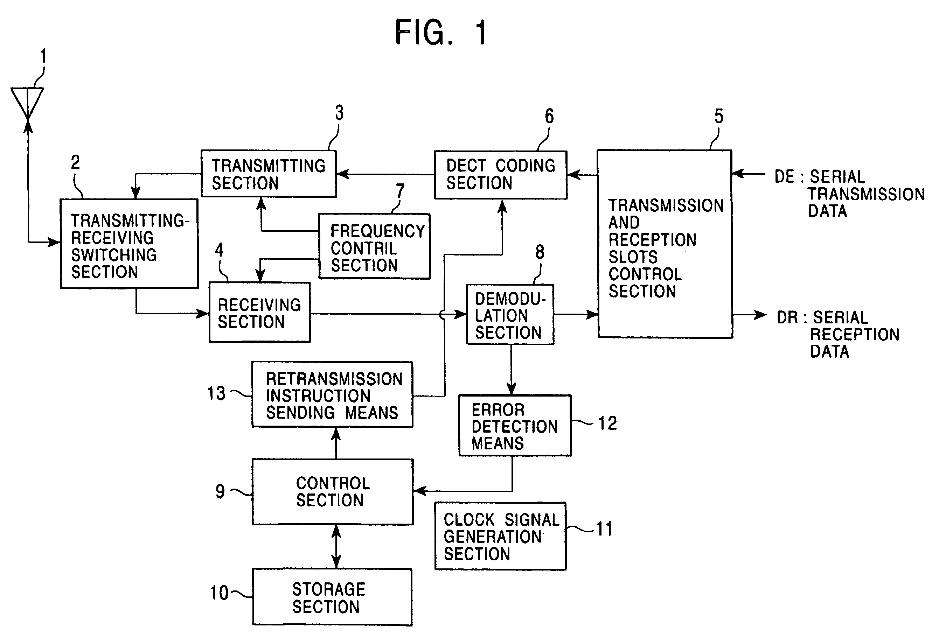

An embodiment of the present invention will be described below with reference to the accompanying drawings. Fig. 1 is a block diagram showing the configuration of functional sections of a DECT data transmitting and receiving apparatus which represents an embodiment of the present invention. In the apparatus shown in Fig. 1, an antenna 1 is selectively connected to a transmitting section 3 or to a receiving section 4 by a transmitting-receiving switching section 2.

A serial transmission data DS is supplied to a DECT coding section 6 via a transmission and reception slots control section 5, and is converted into a signal in the DECT format by the DECT coding section 6. The signal in the DECT format is converted into a transmitted signal by the transmitting section 3 operating at a frequency designated by a frequency control section 7.

A signal received by the receiving section 4 operating at a frequency designated by the frequency control section 7 is demodulated by a demodulation section 8 to extract serial transmission data DR, which is output after being processed in the transmission and reception slots control section 5.

A control section 9 is formed by a central processing unit (CPU) and peripheral devices. A storage section 10 is connected to the control section 9. The storage section 10 is formed by a read-only memory (ROM) (in which a control program is stored), an electrically erasable programmable read-only memory (EEPROM) (in which an ID code, clock rate conversion data, a product address, and frequency adjustment data are recorded), and a random access memory (RAM) (in which temporary data is written, or from which temporary data is read out). The control section 9 controls the transmitting-receiving switching section 2, the transmission and reception slots control section 5, the frequency control section 7, etc. A clock signal generation section 11 generates a signal on which each of the above-described sections operates.

Received data is monitored by an error detection means 12 using a cyclic redundancy check (CRC) error-detecting device used in the standard form of DECT when the received data is demodulated in the demodulation section 8. If the error detection means 12 has detected an error in the data, it informs the control section 9 of the existence of the error. Receiving this error, the control section 9 commands a retransmission instruction sending means 13 to issue a data retransmission instruction demanding retransmission of the data. The DECT coding section 6 transmits the data retransmission instruction.

The above-described data transmitting and receiving apparatus has been shown without a speech coding and decoding processing section, a display device such as a liquid crystal display, a key input device, and so on. However, the data transmitting and receiving apparatus can perform both speech transmission and data transmission.

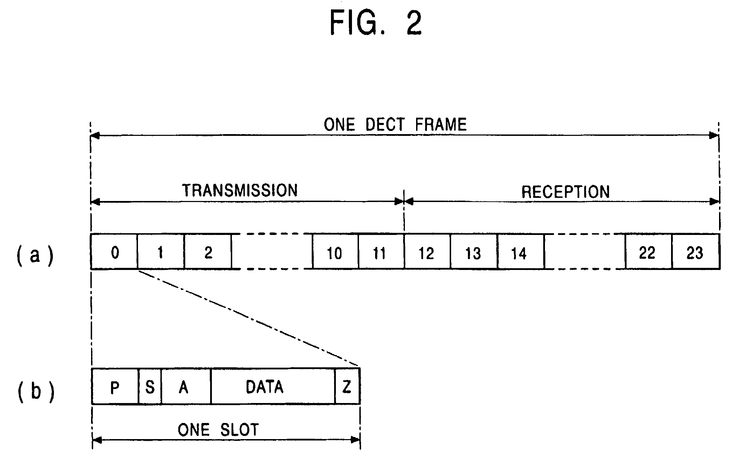

Fig. 2 is a diagram for explaining the data format for DECT transmission and reception in the embodiment of the present invention. In (a) of Fig. 2, one frame in one of a plurality of DECT channels is shown. A group of twelve slots 0 to 11 are used for transmission and another group of twelve slots 12 to 23 are used for reception, and each of the group of transmission slots and the group of reception slots occupy a time period of 5 msec.

One of the slots is shown enlarged in (b) of Fig. 2. The symbols in (b) of Fig. 2 have meanings shown below.
P: sync preamble ... idling time for synchronization
S: sync word ... signal for identification of DECT signal
A: ID code ... identification code for identification of the other-end communicating terminal and some other control signal
DATA: data region ... transmitted data (originally for speech)
Z: error bit ... parity check result

Essentially, speech transmission does not require high error-correcting ability unlike data transmission. In DECT speech transmission, therefore, error correction is performed with respect 1-bit error only and no function for correcting a plurality of error bits is used.

According to the present invention, if a plurality of error data bits are detected, retransmission of data in the corresponding slots is intentionally performed. Retransmission of data is continued until normal data transmission is completed. A procedure for transmitting data in this manner will now be described with reference to Figs. 1 and 3.

Fig. 3 is a flowchart for explaining an example of a data transmission procedure in the embodiment of the present invention.

When data is received for the first time, the existence/non-existence of received data is checked in step S1 (steps S1, S2, ... hereinafter referred to simply as S1, S2, ...).

In S1, data transmitted at an initial transmission rate (e.g., 28.8 kbps) is received. In S2, the error detection means 12 checks whether there is some error in the data in the demodulation section 8 shown in Fig. 1. If the received data is normal, the process is terminated.

If it is determined in S2 that the received data is not normal, a retransmission instruction flag is set in S3. In S4, a retransmission instruction is issued from the retransmission instruction sending means 13. In S5, a new serial data transmission rate is set at a predetermined reduction rate relative to the initial rate. For example, the transmission rate is reduced three steps by being multiplied by 1/n each time transmission is repeated.

When the terminal which has transmitted the data receives the retransmission instruction, it retransmits the data at the transmission rate set at the predetermined reduction rate.

The process returns to S1 and data is received. A check is performed in S2 as to whether there is some error in the received data. If there is no error, the retransmission flag is checked in S6. Since the transmission rate has been changed if the received data is retransmitted data, the flag is cleared in S7 and the data transmission rate is reset to the initial value in S8.

Data transmission in accordance with the present invention has been described with reference to the flowchart by way of example. Since DECT communication apparatus of this embodiment originally designed for speech transmission and reception does not have high error-correcting ability, it performs a particular process without using a complicated error-correcting code, in which, if some error is detected in received data, a retransmission instruction is issued to receive correct data. Also, the data transmission rate may be changed (reduced) in response to a retransmission instruction to improve the reliability with which data is received.

DECT communication performed as described above may be used for replacement of a cable-connected modem or printer, for the operation of a radio-frequency (RF) remote controller or a telemeter, for cancellation of apartment autolocking, for a wireless system using point-of-sale (POS) terminals in family restaurants, for increasing the speed of processing in such a POS system by combining a credit card reader and a wireless POS terminal, etc.

While the operation of one embodiment of the present invention has been described in detail with reference to the drawings, the present invention is not limited thereto, and may include any design changes or the like, as long as the changes do not depart from the scope of the present invention.

For example, the data transmission rate reduction method is not limited to reducing the transmission rate three steps by multiplying it by 1/n. Also, the transmission rate may be changed only after data has been received two times.

An RS232C driver IC may be optionally incorporated in the apparatus to enable a personal computer to directly operate the apparatus through its serial port.

According to the present invention, as described above, a data transmitting and receiving apparatus can be provided which is arranged to transmit one data set by using one speech data transmission slot in DECT data transmission while the same hardware and software systems as those for speech transmission are used, and which can transmit data with improved reliability in a simple manner such that, after a data transmission error has occurred, the data is retransmitted by selecting the transmission rate without reducing the data transmission rate by using a complicated error-correcting coding technique.

## Claims

1. A DECT data transmitting and receiving apparatus which performs transmission and reception of one data set by using one slot in the same format as that for speech transmission, said apparatus comprising:
a DECT coding section for DECT-encoding serial transmission data;
a transmitting section for transmitting, at a predetermined transmission rate, the data encoded by said DECT coding section;
a receiving section for receiving DECT data;
a demodulation section for demodulating the received DECT data received by said receiving section to output a serial reception data;
a frequency control section for controlling frequencies in said transmitting section and said receiving section;
a transmitting-receiving switching section for switching the connection between an antenna and said transmitting section and the connection between said antenna and said receiving section;
a transmission and reception slots control section for performing slot control of the serial transmission data and the serial reception data;
a control section having a storage section in which a control program is stored, from which data can be read, and to which data can be written, said control section controlling each of the other sections;
error detection means for detecting errors in the received data and for informing said control section of a detection result; and
retransmission instruction sending means for sending out a data retransmission instruction by being commanded by said control section according to information from said error detection means, said retransmission instruction designating a data transmission rate set by reducing the predetermined data transmission rate.

2. A DECT data transmitting and receiving apparatus according to Claim 1, wherein the data transmission rate is successively reduced at a predetermined reduction rate, and the data retransmission instruction is sent out a certain number of times.

## Patentansprüche

1. Eine DECT-Datensende- und empfangsvorrichtung, die das Senden und das Empfangen einer Datenmenge unter Verwendung eines Schlitzes im gleichen Format wie dem für die Sprachübertragung durchführt, umfassend:
einen DECT-Codierabschnitt zur DECT-Codierung serieller Sendedaten;
einen Sendeabschnitt zum Senden der von dem DECT-Codierabschnitt codierten Daten mit einer vorbestimmten Übertragungsrate;
einen Empfangsabschnitt zum Empfangen von DECT-Daten;
einen Demodulierabschnitt zum Demodulieren der empfangenen DECT-Daten, die von dem Empfangsabschnitt empfangen wurden, um serielle Empfangsdaten auszugeben;
einen Frequenzsteuerabschnitt zum Steuern von Frequenzen in dem Sendeabschnitt und in dem Empfangsabschnitt;
einen Sende-Empfangs-Umschaltabschnitt zum Umschalten der Verbindung zwischen einer Antenne und dem Sendeabschnitt und der Verbindung zwischen der Antenne und dem Empfangsabschnitt;
einen Sende- und Empfangsschlitz-Steuerabschnitt zum Durchführen einer Schlitzsteuerung für die seriellen Sendedaten und die seriellen Empfangsdaten;
einen Steuerabschnitt mit einem Speicherabschnitt, in welchem ein Steuerprogramm abgespeichert ist, aus dem Daten ausgelesen werden können, und in den Daten eingeschrieben werden können, wobei der Steuerabschnitt jeden der anderen Abschnitte steuert;
eine Fehlerdetektoreinrichtung zum Nachweisen von Fehlern in den Empfangsdaten und zum Informieren des Steuerabschnitts über das Nachweisergebnis; und
eine Neusendebefehls-Sendeeinrichtung zum Senden eines Datenneusendebefehls aufgrund einer Anweisung seitens des Steuerabschnitts entsprechend Information von der Fehlerdetektoreinrichtung, wobei der Neusendebefehl eine Datenübertragungsrate kennzeichnet, die durch Verringern der vorbestimmten Datenübertragungsrate eingestellt ist.

2. DECT-Datensende- und empfangsvorrichtung nach Anspruch 1, bei der die Datenübertragungsrate sukzessive mit einer vorbestimmten Reduktionsgeschwindigkeit verringert wird, und der Datenneusendebefehl mit einer gewissen Häufigkeit abgesendet wird.

## Revendications

1. Appareil de transmision et de réception de données DECT (télécommunications numériques européennes sans fil) qui effectue la transmission et la réception d'un ensemble de données en utilisant un créneau dans le même format que celui servant à la transmission de la parole, ledit appareil comprenant :
une section de codage DECT permettant le codage DECT de données de transmission sérielles ;
une section de transmission permettant de transmettre, à une vitesse de transmission prédéterminée, les données codées par ladite section de codage DECT ;
une section de réception permettant de recevoir les données DECT ;
une section de démodulation permettant de démoduler les données DECT reçues par ladite section de réception pour délivrer des données de réception sérielles ;
une section de contrôle de la fréquence permettant de contrôler les fréquences dans ladite section de transmission et dans ladite section de réception ;
une section de commutation transmission /réception permettant de commuter la connexion entre une antenne et ladite section de transmission, ainsi que la connexion entre ladite antenne et ladite section de réception ;
une section de contrôle des créneaux de transmission et de réception permettant d'effectuer une commande des créneaux des données de transmission sérielles et des données de réception sérielles ;
une section de contrôle comportant une section de stockage dans laquelle est stocké un programme de contrôle, à partir de laquelle on peut lire des données, et sur laquelle on peut écrire des données, ladite section de contrôle contrôlant chacune des autres sections ;
des moyens de détection d'erreurs permettant de détecter des erreurs dans les données reçues, et permettant d'informer ladite section de contrôle d'un résultat de détection ; et
des moyens envoyant des instructions de retransmission permettant d'envoyer une instruction de retransmission de données en étant commandés par ladite section de contrôle selon des informations provenant desdits moyens de détection d'erreurs, ladite instruction de retransmission désignant une vitesse de transmission de données fixée en réduisant la vitesse de transmission de données prédéterminée.

2. Appareil de transmission et de réception de données DECT selon la revendication 1, dans lequel la vitesse de transmission des données est ensuite réduite à une vitesse de réduction prédéterminée, et l'instruction de retransmission de données est envoyée un certain nombre de fois.
